Europäisches Patentamt

European Patent Office

Office européen des brevets

(19)

(11) **EP 0 705 011 B1**

(12) **EUROPEAN PATENT SPECIFICATION**

(45) Date of publication and mention
of the grant of the patent:
**08.08.2001   Bulletin 2001/32**

(51) Int Cl.⁷: **H04L 27/233**

(21) Application number: **95114185.2**

(22) Date of filing: **09.09.1995**

(54) **Digital demodulator with frequency error correction**

Digitaler Demodulator mit Korrektion von Frequenzfehlern

Démodulateur numérique avec correction d'erreur de fréquence

(84) Designated Contracting States:
**DE FR GB IT NL**

(30) Priority:  **29.09.1994   ES 9402057**

(43) Date of publication of application:
**03.04.1996   Bulletin 1996/14**

(73) Proprietor: **ALCATEL**
**75008 Paris (FR)**

(72) Inventors:
 • **Ortega Rodriguez, Fernando**
   **ES-28224 - Pozuelo de Alarcon, (Madrid) (ES)**
 • **Mari Mari, Juan José**
   **ES-28030 Madrid (ES)**
 • **Vazquez Gran, Gregorio**
   **ES-08013 Barcelona (ES)**

(74) Representative: **Lamoureux, Bernard et al**
**Alcatel Espana, S.A,**
**Patent department,**
**Ramirez de Prado, 5**
**28045 Madrid (ES)**

(56) References cited:
**US-A- 4 926 499**

 • **EUROPEAN TRANSACTIONS ON
   TELECOMMUNICATIONS AND RELATED
   TECHNOLOGIES, JAN.-FEB. 1993, ITALY, vol. 4,
   no. 1, ISSN 1120-3862, pages 43-52, HANSEN F.
   ET AL.: 'VLSI digital PSK demodulator for space
   communication'**

## Description

## OBJECT OF THE INVENTION

This invention concerns a demodulator employed in radio receiving systems that use digital phase modulation, and in which occur serious shifts in the received carrier frequency with respect to its nominal value.

This is specially the case with receivers employed for space communications in which the Doppler effect produced by the relative movements of the satellite results in serious shifts in the carrier frequency of the signal reaching the receiver and in which reception of the signal is frequently lost due to fading. It also proves very useful when the signal in question is also affected by a high level of noise.

## BACKGROUND OF THE INVENTION

The receiver architecture for space communications is very similar to that employed for overland communications, however, in the former, it is necessary to take into consideration certain effects that are specific to this type of communication.

This is the case of the Doppler effect resulting from the relative motion of the satellite with respect to the Earth and, consequently, from the relative motion between the transmitters and receivers located in the satellites and in the ground stations.

The typical architecture of this type of receivers is that known as superheterodyne, in which the receiver input signal, at a very high frequency, is mixed with the output frequency of a first local oscillator that translates the input signal to much lower frequencies at which it is possible to carry out analogue processes more easily and cheaply. Bandpass filtering to suppress noise and out-of-band interference, amplification, etc., are cases in point.

When the frequency of the input signals is very high, it is normal practice to use a double frequency conversion. The first uses a fixed oscillator to change the working frequency band down to a lower one, termed first intermediate frequency, and a second frequency conversion with a second local oscillator that incorporates another series of functions depending on the requirements of the communications system in question; this is termed second intermediate frequency.

In the event of there being input signal channelling, this second local oscillator will be in the form of a frequency synthesiser that generates frequencies of different values according to the frequency channels defined for the system.

In this case, the presence of a Doppler frequency associated with the received signal carrier frequency implies the use of a variable frequency oscillator (normally a voltage-controlled oscillator) that receives a carrier error signal.

The first way of resolving this problem was by means of PLLs, or phase-locked loop technology. These devices are extremely reliable in operation, but they must receive the carrier signal continuously so that, from it, they obtain the carrier error signal that is applied to a variable frequency oscillator in order to provide compensation by means of phase-feedback.

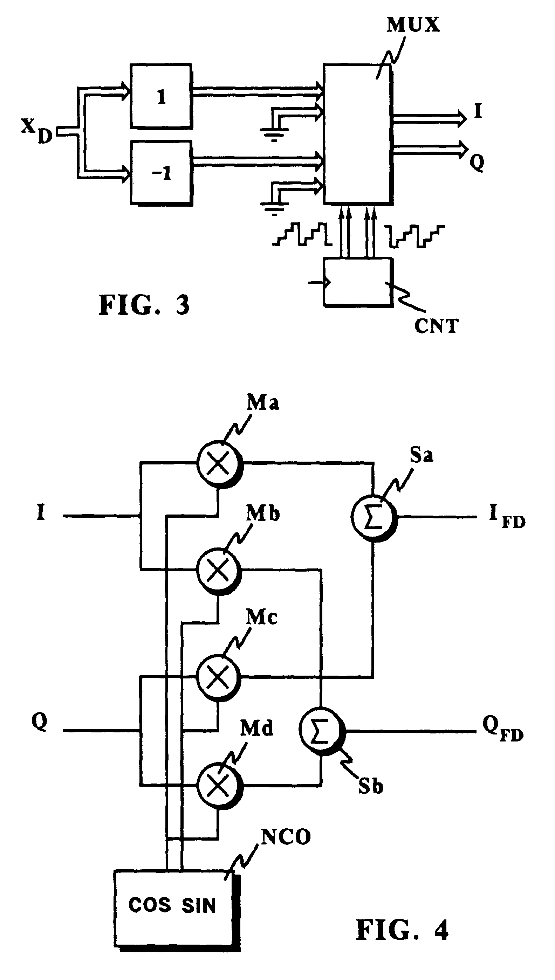

When carrierless modulation schemes are used, the problem becomes more complex and has led to the present methods of incorporating digital signal processing techniques. An example of this kind of receivers is explained in the article "VLSI Digital PSK Demodulator for Space Communication" by F. Hansen et al., published in the review "European Transactions on Telecommunications", Volume 4, Number 1, January/February 1993, pages 43-52. Figure 3.3-1 shows how the phase-modulated input signal is received at an intermediate frequency and is mixed in two multipliers with two tones, shifted in phase from each other by 90°, coming from an oscillator (in this case a numerically controlled oscillator or NCO), the centre frequency of which depends on the value of a carrier error signal obtained subsequently by means of digital signal processing. This permits compensation of shifts in the input signal carrier so that, at the output of each of these mixers, there is a bandpass signal available at a lower working frequency that can be sampled and converted to a digital format.

This new working frequency remains approximately constant, since the shifts in the input signal are compensated by the variations in the frequency of the NCO mentioned.

Nevertheless, the frequency of the input signal continues to be subject to serious shifts due mainly to the Doppler effect produced by the relative motion of the satellite. This results in the intermediate frequency filter having to have a much wider bandwidth than that of the input signal in order to permit the latter to pass even in the worst cases.

As a consequence of this, the noise power passing through the intermediate frequency filter is very large, reducing the sensitivity of the receiver significantly.

In addition, since the frequency error signal that is applied to the NCO is obtained by means of digital signal processing, the feedback loop so formed includes, implicitly, a delay that makes it difficult to track the Doppler frequency, as well as its variations, with sufficient precision and speed. For this reason, it is also necessary to have continuous reception of the input signal, so that in the event of fading or temporary losses, tracking of it could fail since it is not possible to continue obtaining the error signal.

## CHARACTERISATION OF THE INVENTION

In order to overcome the drawbacks mentioned above, the demodulator according to the invention has been developed specially for application in the reception of digital signals with direct phase modulation, particularly difficult to process because they have no carrier.

This demodulator receives an input signal that is mixed with a signal from a local oscillator obtained from a first voltage-controlled oscillator, producing in this way a signal at an intermediate frequency which will subsequently be demodulated to obtain a signal containing data.

Also obtained from this demodulator, by means of a predictor circuit, is a frequency error signal that is applied to the first voltage-controlled oscillator and which acts to compensate the shift in the frequency of the input signal with respect to the local oscillator signal.

The frequency error signal is also applied to a second oscillator, the output signal of which is mixed with the intermediate frequency signal already mentioned in order to reinsert the frequency variations of the input signal, however, this time in opposition to those of the voltage-controlled oscillator, whereby the variations in the original signal are restored so that, once the data that it contains have been removed, it is applied to the predictor circuit in order to obtain an approximation of the frequency error signal mentioned.

As a consequence of the application of the demodulator according to this invention, it is possible to perform fast, accurate tracking of the input signal frequency even in cases of severe Doppler-produced variations. This permits the use of an intermediate frequency bandpass filter that has a sufficiently narrow bandwidth to reject undesired out-of-band noise. In addition, the use of a predictor circuit to obtain the frequency error signal means that, even when the carrier is temporarily absent due to possible fading, effective tracking of the input signal frequency can still proceed.

## BRIEF FOOTNOTES TO THE FIGURES

Below a fuller explanation of the invention is given in connection with the description of an implementation of the invention, based on the figures attached, in which:

- figure 1 shows a general block diagram of the final stage of a receiver that includes a demodulator according to the invention,
- figure 2 shows, in the frequency domain, the output signal of the intermediate frequency filter, before and after performing Nyquist subsampling,
- figure 3 shows, in greater detail, the layout of the baseband conversion module of the demodulator of figure 1, and
- figure 4 shows the arrangement of the phase rotators employed in the demodulator of figure 1.

## DESCRIPTION OF AN IMPLEMENTATION OF THE INVENTION

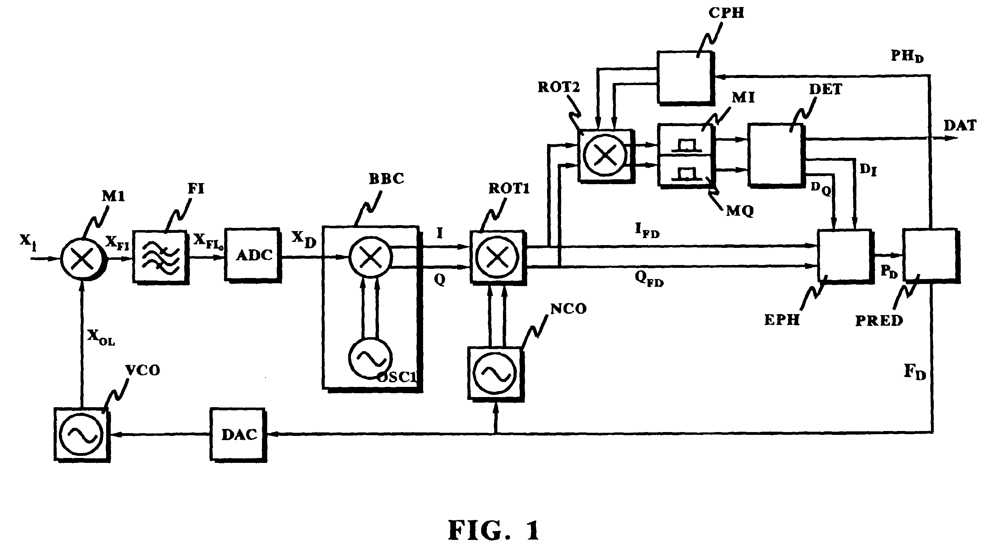

In a radio receiver there are various parts that serve to perform the functions necessary to obtain the data that modulate a radiofrequency signal. The diagram of figure 1 shows only the part of the receiver formed by the demodulator used according to this invention.

It refers to a superheterodyne receiver of the type employed in satellite communications and which has to operate under extreme conditions as regards received signal antenna power and variations in the received signal frequency due to Doppler effect produced by the movement of the satellite.

In this receiver, the radiofrequency signal, which is directly modulated with a QPSK digital signal at 843 kbit/s, is received in the 4 to 6 GHz band and is translated to a lower frequency for subsequent analogue processing (amplification, filtering, etc.). This is the frequency of the input signal Xi in figure 1 to the demodulator made according to the invention. This input signal Xi has a nominal centre frequency of 450 MHz and is subject to serious shifts due, mainly, to the Doppler effect as has already been mentioned.

This input signal Xi is applied to a first multiplier M1 that multiplies this signal by the local oscillator signal $X_{OL}$ produced by a voltage-controlled oscillator VCO, which has a nominal frequency of 520 MHz, producing an intermediate frequency signal $X_{FI}$ at the difference frequency of 70 MHz. There is also a signal at 970 MHz, as sum of the above two frequencies, but this is later rejected by the intermediate frequency filter FI, and consequently is not taken into account.

The voltage-controlled oscillator VCO generates, as has already been stated, a centre frequency of 520 MHz that is modified by a frequency error signal $F_D$ obtained by feedback techniques, so that shifts in the frequency of the input signal Xi are answered with variations in the frequency of the local oscillator signal $X_{OL}$ that act to correct the shift mentioned. The frequency variations of the local oscillator signal are not exactly equal to those of the input signal Xi, instead they are estimated values of the Doppler frequency provided by a predictor circuit PRED. As a direct consequence, this means that, even though the Doppler frequency shift has not been entirely eliminated, the bandwidth of the intermediate frequency filter FI can be reduced until it matches the modulated signal bandwidth, rejecting thereby a significant amount of noise which otherwise could not be suppressed.

The above intermediate frequency signal $X_{FI}$ is applied to the intermediate frequency filter FI producing an output signal $X_{FIo}$ which is applied to an analogue-to-digital converter ADC, so that from this point the modulator always works with digital signals which it processes according to the functions implemented.

This analogue-to-digital converter ADC carries out the conversion of samples taken at a rate of 6.75 MHz, achieving this by applying a Nyquist subsampling process, that is equivalent to a conversion of frequencies to lower values, in this case to 2.5 MHz.

Once the sampling has been performed, the signal can now be handled digitally. The sampling frequency, will depend on the bit rate and it is chosen such that the signal, in digital terms, falls at the frequency $\pi/4$, which corresponds to the analogue frequency of 2.5 MHz.

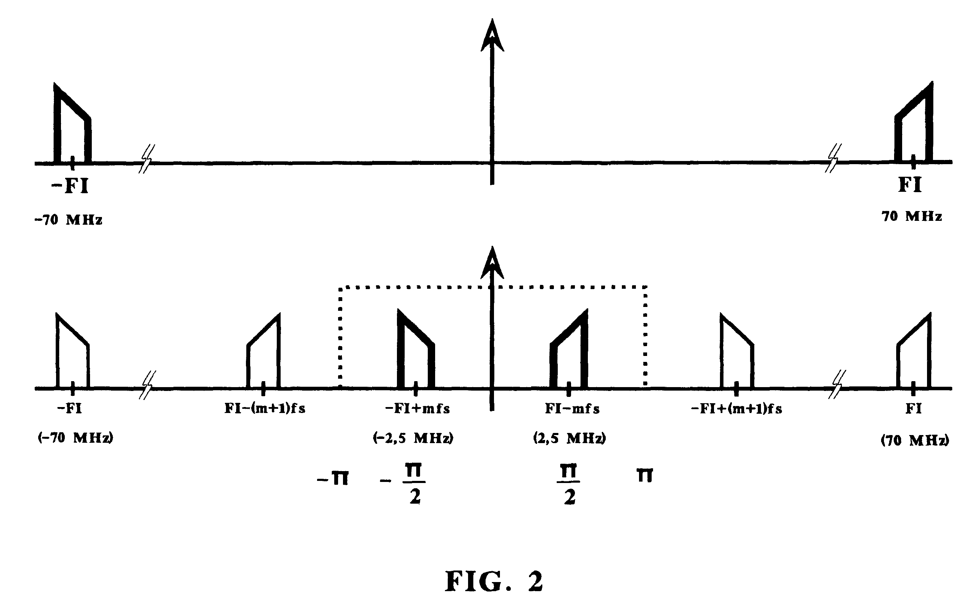

This frequency translation and subsampling process can be seen in figure 2. In the upper part is shown the original signal in the frequency domain, prior to the analogue-to-digital converter ADC, and in the lower part is shown the periodic spectrum of the sampled signal at the output of this converter when Nyquist subsampling has been applied.

In this subsampling, with the values employed for intermediate frequency of 70 MHz and sampling frequency fs of 6.75 MHz, it can be observed that the tenth component of the sampling frequency produces a modulated signal spectrum with centre at 2.5 MHz as has already been indicated.

As a result of this process, a phase-modulated signal with centre at 2.5 MHz is obtained that is mixed digitally in a baseband converter module BBC, with both the in-phase and quadrature tones at the same frequency (2.5 MHz) produced by an internal oscillator OSC1. In this way a shift to the digital baseband is performed and it is only left now to carry out the detection process.

The arrangement used to carry out the baseband conversion BBC is shown in figure 3, in which the signal at its input $X_D$ is first applied to two logic circuits to obtain the inverted signal and the original signal itself $X_D$. In this latter case, it is made to ensure that no additional delay arises between the two paths.

These two signals, along with two others of value zero, are applied to a multiplexer MUX which has two outputs I, Q and which is operated by a control circuit CNT that generates two periodic two-bit control signals (of which one of these is delayed by one sampling clock period with respect to the other), so that each of the outputs I,Q takes the sequence of values $X_D$, 0, $-X_D$, 0, $X_D$, 0, $-X_D$, .. though one is delayed by one sample with respect to the other, which is equivalent to a delay of 90° since the periodicity is four samples.

The control circuit CNT is fed by a 10 MHz clock, which means that the frequency of its output signals is 2.5 MHz. In this way, and since the input signal $X_D$ to the baseband conversion module BBC has the same centre frequency, the output signals I, Q from this module are the in-phase and quadrature components that form the complex envelope of the input signal Xi.

With the voltage-controlled oscillator VCO set at a fixed frequency, these low-pass signals would be perfectly centred on the reference of the frequency axis if there were no relative movement between the satellite and the earth station and, consequently, neither would there be any Doppler effect, but there would be a frequency shifts, equal to the Doppler frequency, in the event that such a relative movement occurred.

Although not mentioned above, the output signal from the analogue-to-digital converter ADC also has a small frequency shift as a result of the error or difference between the input Doppler frequency and the estimated Doppler frequency produced by the predictor circuit PRED, whereby the aforementioned lowpass signals I,Q, in addition to the variations due to the modulation that they have and to the drifts in the oscillators involved, also suffer a phase rotation produced as a consequence of this error.

These two lowpass in-phase and quadrature signals I,Q are applied to a first rotator ROT1 that produces an additional angular rotation in them, equivalent to a frequency equal to the Doppler frequency estimated in the predictor circuit PRED, such that the output signal from this first rotator ROT1 will have the same phase and frequency modulation or Doppler shift as the input signal to the demodulator. This permits, at a later stage, access to this Doppler frequency itself, and thereby make estimates of the value it could take, by means of the predictor circuit PRED, and forward this information to the voltage-controlled oscillator VCO so that it can be compensated. In this way, the intermediate frequency filter FI can be of sufficiently narrow bandwidth because the frequency shifts suffered by the signal are much more restricted.

To carry out the function of the rotator ROT1 mentioned, the configuration of which is shown in figure 4, a signal is applied to it from a numerically controlled oscillator NCO, of which the frequency of oscillation depends proportionally on the Doppler frequency estimation signal produced by the predictor circuit PRED.

The rotator ROT1 consists of four multipliers Ma, Mb, Mc and Md that multiply two signals I,Q at their input by two tones shifted in phase by 90° from each other, and two adders Sa, Sb that add, in twos, the outputs of the previous products. The foregoing satisfies the following expressions:

$$I = X_I \cos \omega_{nco}t - X_Q \sin \omega_{nco}t$$

$$Q = X_I \sin \omega_{nco}t - X_Q \cos \omega_{nco}t$$

implying a rotation through an angle of $\omega_{nco}t$ with respect to the previous in-phase and quadrature coordinates.

The output signals from this first rotator ROT1 are sent, on the one hand, to a phase extractor circuit EPH which suppresses the phase variations due to the modulating signal, and on the other hand, to a second rotator ROT2.

The phase extractor circuit EPH also receives recovered data from a symbol detector DET which obtains the output data signal, reconstituting these from the complex signal at its input.

In this way, at the output of the phase extractor EPH, a Doppler phase signal $P_D$ is available that varies in a periodic manner since it comes from a Doppler frequency that is approximately constant.

The Doppler phase signal $P_D$ is then applied to a predictor circuit PRED consisting in this case of a Kalman filter, which implements an algorithm for the identification of systems based on an estimation/prediction method. In this case, the object is to predict both the Doppler phase and frequency that will be produced in the instant following the sampling, as a function of earlier values. For the phase, this is given by the following expression:

$$x[k+1] = x[k] + v[k] + 0.5\ a[k],$$

where

x[k+1] is the estimated phase value for the following sampling instant,
x[k] is the phase value measured in the present instant,
v[k] is the frequency values in the present instant, and
a[k] is the value of the frequency variation in the present instant.

The values v[k] and a[k] are obtained from phase measurement data obtained during preceding instants. To avoid errors in the measurements made, a weighting process is carried out based on a series of earlier readings such that these are obtained with greater accuracy.

In the case of the Doppler frequency, the estimation is done in a similar way.

In the manner indicated above, the predictor circuit PRED generates a frequency error signal $F_D$ at its output, which is an estimation of the Doppler frequency, and a signal that is an estimation of the Doppler phase $P_D$. The frequency error signal $F_D$ is that which is applied to the numerically controlled oscillator NCO and to the voltage-controlled oscillator VCO via a digital-to-analogue converter DAC, since the signal applied to the voltagecontrolled oscillator VCO has to be in analogue form.

The output signals from the first rotator ROT1 are sent, additionally to a second rotator ROT2 with the same structure as the first and which also receives the phase estimation signal $P_D$ that also comes from the predictor circuit PRED in order to subtract it from that which is contained in the output signals of the first rotator ROT1. This is done using a Cartesian procedure (in-phase and quadrature), for which reason the phase estimation signal $P_D$ is passed previously through a phase conversion circuit CPH which performs the conversion in question. In this way, at the output of this second rotator ROT2, both the in-phase and the quadrature signals are practically free of variations in phase due to the Doppler effect, and there only remains variations in phase due to the modulation.

For optimum demodulation, the output signals of the second rotator ROT2 pass through individual matched filters MI, MQ and the outputs of these are applied to the detector DET that will finally determine the symbols received in order to produce a recovered data output signal DAT, as well as the signals that are sent to the phase extractor EPH in order to implement its previously stated function.

The detector DET, in this type of implementation, is of the Viterbi kind which, based on a channel coding specially adapted to this algorithm, achieves error probabilities that are very low, even for Eb/No (bit energy to spectral noise density) ratios close to 0 dB.

Since the Doppler frequency estimation is obtained from past values and taking into account how it is evolving, it is possible to maintain a "lock" on the carrier during periods when no input signal is being received, as long as these are not excessively long. This means that when the input signal is received once again, there is no significant loss in tracking its frequency. Of course a small accumulative error builds up, however this is quickly corrected when the input signal is again received.

**Claims**

1. **DIGITAL DEMODULATOR** of phase-modulated signals that receives an input signal (Xi) that is mixed, in a first multiplier (M1), with a local oscillator signal ($X_{OL}$) coming from a first voltage-controlled oscillator (VCO), resulting in an intermediate frequency signal ($X_{FI}$) at the output of the first multiplier (M1), which is later detected to obtain the data signal (DAT) it contains, and from which a frequency error signal is also obtained (FD) that is applied to the first voltage-controlled oscillator (VCO) in order to compensate frequency variations in the input signal (Xi) with respect to the local oscillator signal ($X_{OL}$), **characterised** in that the frequency error signal ($F_D$) is also applied to a second oscillator (NCO) the output of which is mixed with the intermediate frequency signal ($X_{FI}$) in order to reinsert the frequency variations of the input signal (Xi), in such a manner that the frequency error signal ($F_D$) is subsequently obtained from the resulting signal.

2. **DIGITAL DEMODULATOR** according to claim 1, **characterised** in that the frequency error signal ($F_D$) is obtained from a predictor circuit (PRED), from the values of the frequency error signal ($F_D$) obtained at earlier instants and of their variations, and of the input signal phase shifts, without taking into account those that are a consequence of the modulation.

3. **DIGITAL DEMODULATOR** according to claim 1, <u>characterised</u> in that an analogue-to-digital conversion of the intermediate frequency signal ($X_{FI}$) is made with a sampling frequency below that of the intermediate frequency, a low-pass conversion taking place simultaneously with the actual analogue-to-digital conversion.

4. **DIGITAL DEMODULATOR** according to claim 2, <u>characterised</u> in that the predictor circuit (PRED), in addition, generates a phase error estimation signal ($PH_D$) that is employed to compensate the phase shifts of the in-phase and quadrature components.

5. **DIGITAL DEMODULATOR** according to claim 4, <u>characterised</u> in that the phase shifts of the in-phase and quadrature components of the input signal, that are to be applied to a detector (DET), are compensated in a second rotator (ROT2) with the phase estimation signal ($PH_D$) coming from the predictor circuit (PRED), the Cartesian components of which are obtained beforehand in a phase conversion circuit (CPH).

**Patentansprüche**

1. Digitaler Demodulator für phasenmodulierte Signale, der ein Eingangssignal (Xi) empfängt, das in einem ersten Multiplizierer mit einem von einem ersten spannungsgesteuerten Oszillator (VCO) kommenden Lokaloszillatorsignal ($X_{OL}$) gemischt wird, was zu einem Zwischenfrequenzsignal ($X_{FI}$) am Ausgang des ersten Multiplizierers (M1) führt, das später erfasst wird, um das darin enthaltene Datensignal (DAT) zu erhalten, und aus dem auch ein Frequenzfehlersignal ($F_D$) erhalten wird, das an den ersten spannungsgesteuerten Oszillator (VCO) angelegt wird, um Frequenzschwankungen im Eingangssignal (Xi) mit Bezug auf das Lokaloszillatorsignal ($X_{OL}$) zu kompensieren, dadurch gekennzeichnet, dass das Frequenzfehlersignal ($F_D$) auch an einen zweien Oszillator (NCO) angelegt wird, dessen Ausgabe mit dem Zwischenfrequenzsignal ($X_{FI}$) gemischt wird, um die Frequenzschwankungen des Eingangssignals (Xi) wieder einzufügen, so dass das Frequenzfehlersignal ($F_D$) anschließend aus dem resultierenden Signal erhalten wird.

2. Digitaler Demudolator nach Anspruch 1, dadurch gekennzeichnet, dass das Frequenzfehlersignal ($F_D$) von einer Vorhersageschaltung (PRED) aus den zu früheren Zeitpunkten erhaltenen Werten des Frequenzfehlersignals ($F_D$) und deren Schwankungen und den Eingangssignalphasenverschiebungen ohne Berücksichtigung derjenigen, die eine Folge der Modulation sind, erhalten wird.

3. Digitaler Demodulator nach Anspruch 1, dadurch gekennzeichnet, dass eine Analog-Digital-Wandlung des Zwischenfrequenzsignals ($X_{FI}$) mit einer Abtastfrequenz unterhalb der Zwischenfrequenz erfolgt, wobei gleichzeitig mit der tatsächlichen Analog-Digital-Wandlung eine Tiefpasswandlung stattfindet.

4. Digitaler Demodulator nach Anspruch 2, dadurch gekennzeichnet, dass die Vorhersageschaltung (PRED) zusätzlich ein Phasenfehlerabschätzungssignal ($PH_D$) erzeugt, das verwendet wird, um die Phasenverschiebungen der In-Phase- und Quadratur-Komponenten zu kompensieren.

5. Digitaler Demodulator nach Anspruch 4, dadurch gekennzeichnet, dass die Phasenverschiebungen der In-Phase- und Quadratur-Komponenten des Eingangssignals, die an einen Detektor (DET) angelegt werden, in einem zweiten Rotator (ROT2) mit dem von der Vorhersageschaltung (PRED) kommenden Phasenabschätzungssignal ($PH_D$) kompensiert werden, dessen kartesische Komponenten vorab in einer Phasenwandlungsschaltung (CPH) erhalten werden.

**Revendications**

1. Démodulateur numérique de signaux modulés en phase qui reçoit un signal d'entrée (Xi) qui est mélangé, dans un premier multiplicateur (M1), avec un signal d'oscillateur local ($X_{OL}$) provenant d'un premier oscillateur commandé en tension (VCO), résultant en un signal de fréquence intermédiaire ($X_{FI}$) à la sortie du premier multiplicateur (M1), qui est démodulé ultérieurement afin d'obtenir le signal de données (DAT) qu'il contient, et à partir duquel un signal d'erreur de fréquence ($F_D$) est également obtenu, qui est appliqué au premier oscillateur commandé en tension (VCO) afin de compenser les variations de fréquence du signal d'entrée (Xi) par rapport au signal d'oscillateur local ($X_{OL}$), caractérisé en ce que le signal d'erreur de fréquence ($F_D$) est également appliqué à un second oscillateur (NCO) dont la sortie est mélangée avec le signal de fréquence intermédiaire ($X_{FI}$) afin de réinsérer les variations de fréquence du signal d'entrée (Xi), de telle manière que le signal d'erreur de fréquence ($F_D$) soit obtenu, par la suite, à partir du signal résultant.

2. Démodulateur numérique selon la revendication 1, caractérisé en ce que le signal d'erreur de fréquence ($F_D$) est obtenu à partir d'un circuit de prédiction (PRED), à partir des valeurs du signal d'erreur de fréquence ($F_D$) obtenues à des instants précédents et de leurs variations, et des déphasages du signal d'entrée, sans prendre en compte ceux qui sont une conséquence de la modulation.

3. Démodulateur numérique selon la revendication 1, caractérisé en ce qu'une conversion analogique-numérique du signal de fréquence intermédiaire ($X_{FI}$) est effectuée avec une fréquence d'échantillonnage inférieure à celle de la fréquence intermédiaire, une conversion passe-bas ayant lieu en même temps que la conversion analogique-numérique réelle.

4. Démodulateur numérique selon la revendication 2, caractérisé en ce que le circuit de prédiction (PRED), de plus, génère un signal d'estimation d'erreur de phase ($PH_D$) qui est employé pour compenser les déphasages des composantes en phase et en quadrature de phase.

5. Démodulateur numérique selon la revendication 4, caractérisé en ce que les déphasages des composantes en phase et en quadrature de phase du signal d'entrée, qui doivent être appliquées au détecteur (DET), sont compensés dans un second rotateur (ROT2) par le signal d'estimation de phase ($PH_D$) provenant du circuit de prédiction (PRED), dont les composantes cartésiennes sont obtenues au préalable dans un circuit de conversion de phase (CPH).

**FIG. 1**

EP 0 705 011 B1

**FIG. 2**

FIG. 3

FIG. 4